# EUROPÄISCHE PATENTSCHRIFT

(11) **EP 3 333 124 B1**
(45) Veröffentlichungstag und Bekanntmachung des Hinweises auf die Patenterteilung: **26.06.2019**
(21) Anmeldenummer: 16400057.2
(22) Anmeldetag: 09.12.2016
(51) Int. Cl.: C01B 3/50, B01D 53/14, C01B 3/52, C10J 3/00, C10K 1/00, F25J 3/04

(54) **ANLAGE UND VERFAHREN ZUR ERZEUGUNG VON SYNTHESEGAS**
INSTALLATION AND METHOD FOR THE PRODUCTION OF SYNTHESIS GAS
INSTALLATION ET PROCÉDÉ DE PRODUCTION DE GAZ DE SYNTHÈSE

(43) Veröffentlichungstag der Anmeldung: 13.06.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Chaubet, Lucie, D-60385 Frankfurt am Main (DE); Bonne, Frédéric, 75020 Paris (FR); Bouet, Camille, 31600 Eaunes (FR); Schlichting, Holger, 65719 Hofheim (DE); Wagner, Marc, 94100 Saint Maur des Fosses (FR)
(74) Vertreter: Dropsch, Holger

(56) Entgegenhaltungen:
- EP-A1- 0 556 691
- EP-A1- 2 292 554
- EP-A2- 2 498 033
- WO-A2-2004/089499
- DE-A1-102005 046 790
- US-A1- 2010 018 216

## Beschreibung

### Gebiet der Erfindung

Die Erfindung betrifft ein Verfahren zur Erzeugung eines hauptsächlich aus Kohlenmonoxid und Wasserstoff bestehenden und von Sauergasen befreiten Synthesegases, ausgehend von einem kohlenwasserstoffhaltigen Brennstoff, sowie Luft und Dampf, umfassend die folgenden Verfahrensschritte:
- Zerlegung von Luft durch Tieftemperatur-Rektifikation in einen Sauerstoff-, einen Restgas- und ein Stickstoffstrom, wobei der Restgas- und der Stickstoffstrom Umgebungstemperatur und der Stickstoffstrom einen erhöhten Druck hat
- Umwandlung eines kohlenwasserstoffhaltigen Brennstoffs bei erhöhter Temperatur und erhöhtem Druck mit dem Sauerstoffstrom und dem Dampf in ein Synthesegas,
- Abtrennung der Sauergase aus dem Synthesegas durch Tieftemperatur-Absorption in einer Absorptionskolonne mit einem flüssigen Absorptionsmittel
- Kühlung des verwendeten Absorptionsmittels auf die für die Tieftemperatur-Absorption notwendige tiefe Temperatur mittels einer Kompressionskälteanlage, wobei die Kompressionskälteanlage einen Kältemittelkreislauf umfasst in dem das Kältemittel komprimiert und die dabei auf das Kältemittel übertragene Kompressionswärme durch anschließenden Wärmeaustausch mit Kühlwasser wieder dem Kältemittel entzogen wird,
- Kühlung des Kühlwassers vor dessen Wärmeaustausch mit dem Kältemittel durch Verdunstungskühlung.

Die Erfindung umfasst ebenso eine Anlage zur Durchführung des Verfahrens.

### Stand der Technik

Die der Erfindung zugrunde liegenden Verfahren, kryogene Luftzerlegung, Erzeugung von Synthesegas aus einem kohlenstoffhaltigem Brennstoff und die kryogene Abtrennung von Sauergas aus dem (Roh-)Synthesegas gehören zum Stand der Technik.

Kryogene Luftzerlegung, auch Tieftemperatur-Zerlegung genannt, ist seit den 1920-ziger Jahre bekannt und grundsätzlich z.B. in Ullmann's Encyclopedia of Industrial Chemistry, 6th Edition, Vol. 10, S. 39, 40 beschrieben. Im Zusammenhang mit Synthesegasproduktion wird häufig von den bekannten Luftzerlegungsverfahren die Doppelsäulen-Rektifikation verwendet, da dabei, neben dem Sauerstoffstrom, auch ein Strom reinen Stickstoffs erzeugt wird, der häufig in der Synthesegasproduktion nachgeschalteten Anlagen verwendet werden kann. Eine Ausführungsart der Doppelsäulen-Rektifikation, die häufig für die Synthesegasproduktion verwendet wird, ist in dem Fachbuch Gasification, Second Edition, Christopher Higman, Maarten van der Burgt, Gulf Professional Publishing, Elsevier, Burlington, USA beschrieben.

Bei dieser Ausführungsart wird der aus der Umgebung angesaugte Luftstrom verdichtet und einer Vorreinigung unterzogen, bei der in einem Adsorptionsschritt Feuchte und langkettige Kohlenwasserstoffmoleküle und dann, mittels Molekularsieb, Kohlendioxid und die übrigen Kohlenwasserstoffe abgetrennt werden. Der so behandelte Luftstrom wird dann in Wärmeaustausch mit den die Doppelsäulen-Rektifikation verlassenden Produktströme, Sauerstoff, Stickstoff und Restgas, gebracht.

Der Wärmeaustausch wird so durchgeführt, dass die komprimierte Luft bis auf ihre Kondensationstemperatur abgekühlt und die Produktströme bis auf Umgebungstemperatur erwärmt werden. Dabei wird das Verfahren häufig so durchgeführt, dass der Stickstoffproduktstrom, nach dem Wärmeaustausch und der dabei erfolgten Erwärmung auf Raumtemperatur, einen erhöhten Druck von ca. 5 - 6 bar besitzt. Dieser Stickstoff kann als Utility für andere Anlagen oder, z.B. nach Entspannung und Abkühlung, zur Vorkühlung der Luft für die Luftzerlegungsanlage verwendet werden.

Der in der Luftzerlegung produzierte Sauerstoff wird anschließend, zusammen mit einem Dampfstrom, zur Umwandlung, auch Vergasung genannt, eines kohlenwasserstoffhaltigen Brennstoffs zu hauptsächlich aus Wasserstoff und Kohlenmonoxid bestehendem Synthesegas verwendet. Als Brennstoff wird häufig Kohle, Koks oder Erdgas verwendet, aber auch flüssige Kohlenwasserstoffe oder Biomasse. Eine Vielzahl von Verfahren und Reaktortypen sind für die jeweilig vorliegenden Brennstoffe entwickelt worden. Einen Überblick über diese Vergasungsverfahren gibt z. B. auch das oben erwähnte Fachbuch Gasification.

Grundsätzlich sind alle diese Vergasungsverfahren für die vorliegende Erfindung einsetzbar.

Für die weitere Verwendung des Synthesegases, als Rohstoff für die Produktion von z.B. Methanol, Ammoniak oder Wasserstoff oder als Brenngas, müssen aus ihm Kohlendioxid und Schwefelwasserstoff, zusammenfassend oft als Sauergase bezeichnet, abgetrennt werden. Dies geschieht sehr wirksam mit einem Tieftemperaturabsorptionsverfahren, bei dem tief abgekühltes Methanol als Absorptionsmittel verwendet wird. Das Verfahren ist unter dem Namen Rectisol Prozess seit den 1950-ziger Jahren bekannt. Eine Beschreibung ist z.B. in Ullmann's Encyclopedia of Industrial Chemistry, 6th edition, Vol. 15, S. 399 ff gegeben. Die Sauergase werden dabei in einer Kolonne, im Gegenstrom, vom tiefkalten Methanol ausgewaschen. Beim sogenannten Standard-Rectisol-Prozess werden beide Sauergase, Kohlendioxid und Schwefelwasserstoff, in einer Kolonne ausgewaschen. Das zu waschende Synthesegas tritt am Boden in die Kolonne ein, im unteren Teil der Kolonne wird hauptsächlich Schwefelwasserstoff und dann, im oberen Teil, hauptsächlich Kohlendioxid ausgewaschen. Bei der Regenerierung des Methanols werden die Sauergase als Gasgemisch gewonnen und zur weiteren Behandlung abgeführt. Für den Fall, dass man Kohlendioxid und Schwefelwasserstoff getrennt gewinnen will, wurde das sogenannte selektive Rectisol-Verfahren entwickelt. Dabei durchströmt das zu reinigende Synthesegas zwei nacheinander angeordnete Wasch- bzw. Absorptionskolonnen. In der ersten wird Schwefelwasserstoff, in der zweiten Kohlendioxid abgetrennt. Die Gase werden so getrennt gehalten und können anschließend jeweils aus dem beladenen Methanol ausgetrieben werden. Für die vorliegende Erfindung können sowohl das Standard als auch das Selektive Rectisol-Verfahren zum Einsatz kommen. Die Einstellung der für das Verfahren erforderlichen tiefen Temperatur des Methanols erfolgt, indem ein beladener Methanolstrom, der durch die Absorption erwärmt wurde, der Absorptionskolonne entnommen, durch Wärmeaustausch mit einem Kühlmedium gekühlt und dann wieder in die Kolonne eingespeist wird. Als Kühlmedium wird häufig Ammoniak, das in einer Kompressionskühlanlage entsprechend heruntergekühlt wird. Die in der Kompressionskühlanlage auf das Kühlmedium übertragene Kompressionsenergie führt zu einer Erwärmung des Kühlmediums. Durch Wärmeaustausch mit Kühlwasser wird diese Wärme dem Kühlmedium wieder entzogen. Das Kühlwasser selbst wird, vor dem Wärmeaustausch mit dem Kühlmedium, durch Verdunstungskühlung gekühlt.

Das Verfahren erfordert insbesondere in den Schritten Herstellung des Vergasungsmittels durch Luftzerlegung und Abtrennung des Sauergases einen hohen Aufwand an elektrischer Energie, z.B. für die Komprimierung der Luft für die Luftzerlegung und die Komprimierung des Kältemittels in der Kompressionskälteanlage zur Kühlung des Absorptionsmittels.

EP 2 498 033 A2 offenbart die Kühlung eines in einem Gaswäscheverfahren verwendeten Lösungsmittels durch in einer Anlage zur Luftzerlegung erzeugten flüssigen oder gasförmigen Stickstoff oder Sauerstoff.

EP 2 292 554 A1 offenbart die Herstellung von Ammoniak aus Wasserstoff und Stickstoff umfassendem Synthesegas. Das rohe Synthesegas wird in einem kryogenen Reinigungsabschnitt behandelt und dabei ein gereinigter Synthesegasstrom erhalten. Dem kryogenen Reinigungsabschnitt wird ein flüssiger, stickstoffreicher Strom zugeführt, wobei ein indirekter Wärmetausch zwischen dem Synthesegas und dem stickstoffreichen Strom vorgesehen ist. Dabei wird der stickstoffreiche Strom zumindest teilweise verdampft, um eine Kühlung des kryogenen Reinigungsabschnitts bereitzustellen

EP 0 556 691 offenbart ein Verfahren zur Vergasung von kohlenstoffhaltigen Rück-ständen mit Sauerstoff aus einer Luftzerlegungsanlage unter Zusatz von Dampf. Dabei wird durch Schwefelwasserstoff-Wäsche und Konvertierung von Kohlenmonoxid in einer Wassergas-Shift-Reaktion Roh-Wasserstoff sowie Kohlendioxid und Schwefel-wasserstoff erzeugt. Ein Teilstrom des Schwefelwasserstoff-freien, hauptsächlich Wasserstoff und Kohlenmonoxid aufweisenden Rohgases wird über eine Entspan-nungsturbine als Heizgas zur Erzeugung von Hockdruckdampf abgezweigt.

Die Aufgabe der Erfindung ist es, eine Variante des Verfahrens zur Verfügung zu stellen, die einen niedrigeren Verbrauch an elektrischer Energie zu ihrem Betrieb aufweist.

### Beschreibung der Erfindung

Die Aufgabe wird durch ein Verfahren gemäß den Merkmalen des Anspruchs 1 und durch eine Anlage gemäß den Merkmalen des Anspruchs 3 gelöst.

Im ersten Schritt des erfindungsgemäßen Verfahrens, der Luftzerlegung, wird als Neben- bzw. Abfallprodukt, mit hohem apparativen und energetischen Aufwand hochgespannter Stickstoff und ein Restgasstrom erzeugt. Diese Ströme sind vollkommen trocken und die Erfindung nutzt deren dadurch gegebene, besonders gute Aufnahmefähigkeit für Feuchte, indem sie diese Ströme für die Verdunstungskühlung des für die Kompressionskälteanlage der Rectisol-Anlage benötigten Kühlwassers nutzt. Im Vergleich zur Verwendung von Umgebungsluft, die fast immer einen gewissen Feuchteanteil enthält, kann so eine tiefere Kühlwassertemperatur und damit wiederum eine tiefere Temperatur des Kältemittels erreicht werden. Durch die Kompression wird das Kältemittel im Kältemittelkreislauf erwärmt und anschließend, durch Wärmeaustausch mit Kühlwasser, wieder gekühlt. Der Vorteil der Erfindung liegt darin, dass die für die Kühlung des Absorptionsmittels der Rectisol-Anlage notwendige tiefe Temperatur des Kältemittels mit einem geringeren Druck bei der Kondensierung des Kältemittels erfolgen kann. Der Verbrauch an elektrischer Energie zur Kompression des Kältemittels wird durch die Erfindung gesenkt.

Das Kühlwasser, das im Verdunstungskühler gekühlt wird, wird dem Verfahren bzw. der Anlage von außen, z.B. von einer Kühlwasserversorgungsanlage, die nicht zum Umfang der Erfindung gehört, zugeführt und, nach Gebrauch, wieder von der erfindungsgemäßen Anlage dorthin wieder zurückgeführt.

Im Verdunstungskühler wird das Kühlwasser mit dem Restgas- und/oder dem entspannten Stickstoffstrom in Kontakt gebracht. Dabei können dem Fachmann bekannte Mittel, wie strukturierte Packungen oder Füllkörperschüttungen, zum Einsatz kommen.

### Bevorzugte Ausgestaltungen der Erfindung

Eine bevorzugte Ausgestaltung der Erfindung ist dadurch gekennzeichnet, dass der durch Luftzerlegung erzeugte Stickstoffstrom, bevor er zur Verdunstungskühlung des Kühlwassers verwendet wird, über eine Turbine entspannt, dabei abgekühlt und anschließend zur Kühlung des Kältemittels im Kältemittelkreislauf der Kompressionskälteanlage verwendet wird. Auf diese Weise wird auch das in diesem Strom enthaltenen Druckpotential zur Unterstützung der Kompressionskälteanlage ausgenutzt und der Energieaufwand für die Kompression gesenkt.

### Ausführungsbeispiele

Weiterbildungen, Vorteile und Anwendungsmöglichkeiten der Erfindung ergeben sich auch aus der nachfolgenden Beschreibung von nicht beschränkenden Ausführungs- und Zahlenbeispielen und den Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen die Figuren:
Fig. 1, Blockschema der erfindungsgemäßen Anlage
Fig. 2, Verfahrensschema eines Kompressionskältemittelkreislaufs mit der erfindungsgemäßen Verwendung von Stickstoff und Restgas zur Kühlung des Kühlwassers

Im Folgenden sollen die Figuren der Zeichnung erläutert werden:

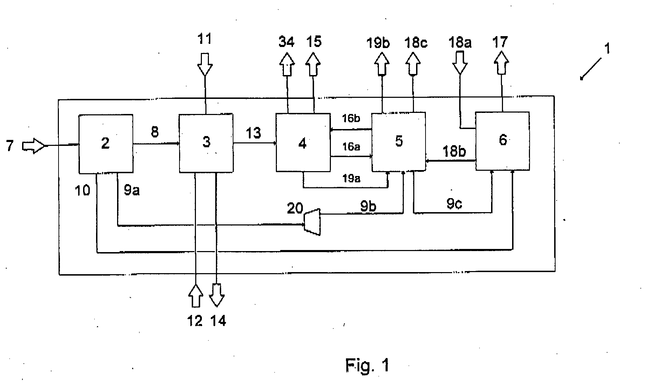

In Fig. 1 umfasst die erfindungsgemäße Anlage 1 die Teilanlagen kryogene Luftzerlegung 2, Vergasung 3, Rectisolanlage 4, Kompressionskälteanlage 5 und den Verdunstungskühlanlage 6. Luft 7 wird aus der Umgebung angesaugt und in der Luftzerlegung 2 in einen Sauerstoff 8 -, einen Stickstoff 9 a- und einen Restgasstrom 10 zerlegt. Der Vergasungsanlage 3 wird kohlenstoffhaltiger Brennstoff 11 zugeführt und darin mit dem Sauerstoffstrom 8 und der Anlage zugeführtem Dampf 12 in Rohsynthesegas 13 und Asche 14 umgewandelt. Das erzeugte Rohsynthesegas 13 wird der Rectisolanlage 4 zugeführt, wo durch kryogene Absorption, mit Methanol als Absorptionsmittel, die Sauergase Schwefelwasserstoff 34 und Kohlendioxid 19 abgetrennt werden. Der abgetrennte Schwefelwasserstoff wird als Strom 34 und das gereinigte Synthesegas als Strom 15 zur weiteren Behandlung aus der Anlage 1 ausgeleitet. Das abgetrennte Kohlendioxid 19 a wird zur Kühlung im Kältemittelkreislauf der Kompressionskälteanlage 5 verwendet und anschließend als Strom 19 b aus der Anlage zur weiteren Verwendung oder Entsorgung ausgeleitet. Das in der Rectisolanlage 4 verwendete Absorptionsmittel Methanol wird bei seiner Verwendung erwärmt und muss daher kontinuierlich gekühlt werden. Ein Strom erwärmten Methanols 16 a wird in die Kompressionskälteanlage 5 geleitet, dort gekühlt, und als Strom 16 b zurück in die Rectisolanlage 4 geführt. Die Kühlleistung der Teilanlage 5 wird unterstützt, indem der in der Luftzerlegung 2 erzeugte und in der Turbine 20 entspannte und dabei abgekühlte Stickstoffstrom 9 b zur Kühlung des Kältemittels im Kältemittelkreislauf der Kompressionskälteanlage 5 herangezogen wird. Der in der Turbine 20 entspannte und abgekühlte Stickstoffstrom 9 b wird in die Kompressionskälteanlage 5 geleitet, dort erwärmt und als Strom 9 c zum Kühlturm 6 geleitet, um dort, zusammen mit dem Restgasstrom 10 aus der Luftzerlegung 2, den Kühlturm zu durchströmen und das Kühlwasser durch Verdunstung zu kühlen. Das im Kühlturm mit Feuchte beladene Stickstoff-Restgasgemisch 17 wird zur weiteren Behandlung außerhalb der Anlage 1 ausgeleitet. Von einer außerhalb der Anlage 1 liegenden, nicht dargestellten Anlage wir Kühlwasser 18 a dem Kühlturm 6 zugeführt, darin gekühlt und als Strom 18 b der Kompressionskälteanlage 5 zugeführt und von dort, als Strom 18 c aus der Anlage 1 ausgeführt.

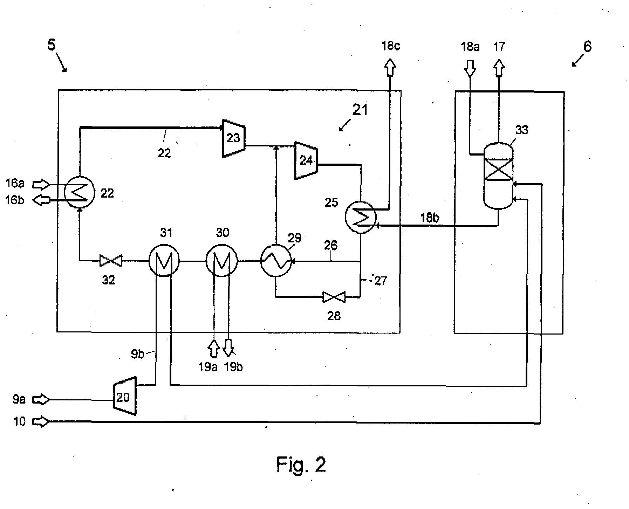

Fig. 2 zeigt die Teile Kompressionskälteanlage 5 und Verdunstungskühlanlage 6 der erfindungsgemäßen Anlage. Im Kompressionskältemittelkreislauf 21 zirkuliert das Kältemittel. Häufig wird als Kältemittel Ammoniak oder auch Propylen verwendet.

Der Kältemittelstrom 22 wird in zwei Stufen in den hintereinander geschalteten Verdichter 23 und 24 komprimiert und in Wärmeaustauscher 25 mittels Kühlwasser gekühlt und zum Teil kondensiert. Der Kältemittelstrom wird dann in die Ströme 26 und 27 aufgeteilt. Der Strom 27 wird in Ventil 28 entspannt, dabei abgekühlt und zur Kühlung des Stroms 26 in Wärmeaustauscher 29 verwendet und anschließend vor Verdichter 24 wieder in den Hauptstrom zurückgeführt. Der Kältemittelstrom 26 wird, nach der Kühlung in Wärmetauscher 29 in Wärmetauscher 30 durch den, in der Rectisolanlage 4, Fig. 1 abgetrennten Kohlendioxidstrom 19 a gekühlt. Aus der Luftzerlegung 2, Fig. 1 wird der dort erzeugte Stickstoffstrom 9 a herangeführt, in der Turbine 20 entspannt und abgekühlt. Als Strom 9 b wird der Stickstoffstrom dann in Wärmeaustauscher 31 zur Kühlung des Kältemittelstroms verwendet. Anschließend wird der Kältemittelstrom in Ventil 32 entspannt, dabei weiter abgekühlt und dann, in Wärmeaustauscher 22 zur Kühlung des Absorptionsmittels Methanol 16 a, b verwendet. Von einer nicht dargestellten und nicht zur Anlage gehörenden Versorgungseinrichtung wird Kühlwasser 18 a in den Verdunstungskühler 33 der Teilanlage 6 eingeleitet. Ebenso wird Restgas 10 aus der Luftzerlegung 2, Fig. 1 und der Stickstoffstrom 9 c in den Verdunstungskühler 33 eingeleitet. Diese Gase werden mit Feuchtigkeit beladen, als Strom 17, aus der Anlage ausgeleitet und entsorgt. Das im Verdunstungskühler 33 gekühlte Kühlwasser 18 b wird in die Kompressionskälteanlage 5 geleitet, dort in Wärmeaustauscher 25 zur Kühlung und Kondensation des Kältemittels verwendet und dann, als Strom 18 c, aus der Anlage ausgeleitet.

### Gewerbliche Anwendbarkeit

Die Erfindung liefert eine Möglichkeit bei der Herstellung von sauergasbefreitem Synthesegas, den Aufwand an elektrischer Energie zu senken. Die Erfindung ist daher gewerblich anwendbar.

### Bezugszeichenliste

- 1: erfindungsgemäßes Verfahren/Anlage
- 2: Tieftemperatur-Luftzerlegung
- 3: Vergasung
- 4: Tieftemperatur-Absorption (Rectisol-Anlage)
- 5: Kompressionskälteanlage
- 6: Verdunstungskühlanlage
- 7: Luft
- 8: Sauerstoff
- 9: Stickstoff
- 10: Restgas
- 11: Kohlenwasserstoffhaltiger Brennstoff
- 12: Dampf
- 13: Rohsynthesegas, Sauergase enthaltend
- 14: Reststoff/Asche
- 15: Synthesegas, frei von Sauergasen
- 16: a, b Methanol
- 17: Stickstoff-Restgas-Gemisch, beladen mit Feuchte
- 18: a, b, c Kühlwasser
- 19: a, b Kohlendioxid
- 20: Turbine
- 21: Kompressionskältemittelkreislauf
- 22: Kältemittelstrom
- 23: Verdichter
- 24: Verdichter
- 25: Wärmeaustauscher
- 26: Kältemittelstrom
- 27: Kältemittelstrom
- 28: Ventil
- 29: Wärmeaustauscher
- 30: Wärmeaustauscher
- 31: Wärmeaustauscher
- 32: Ventil
- 33: Verdunstungskühler

## Patentansprüche

1. Verfahren zur Erzeugung eines hauptsächlich aus Kohlenmonoxid und Wasserstoff bestehenden und von Sauergasen befreiten Synthesegases, ausgehend von einem kohlenwasserstoffhaltigen Brennstoff, sowie Luft und Dampf, umfassend die folgenden Verfahrensschritte:
a) Zerlegung von Luft durch Tieftemperatur-Rektifikation in einen Sauerstoff-, einen Restgas- und ein Stickstoffstrom, wobei der Restgas- und der Stickstoffstrom Umgebungstemperatur und der Stickstoffstrom einen erhöhten Druck hat,
b) Umwandlung eines kohlenwasserstoffhaltigen Brennstoffs bei erhöhter Temperatur und erhöhtem Druck mit dem in Schritt a) erzeugten Sauerstoffstrom und dem Dampf in ein Synthesegas,
c) Abtrennung der Sauergase aus dem in Schritt b) erzeugten Synthesegas durch Tieftemperatur-Absorption in einer Absorptionskolonne mit einem flüssigen Absorptionsmittel,
d) Kühlung des in Schritt c) verwendeten Absorptionsmittels auf die für die Tieftemperatur-Absorption notwendige tiefe Temperatur mittels einer Kompressionskälteanlage, wobei die Kompressionskälteanlage einen Kältemittelkreislauf umfasst, in dem das Kältemittel komprimiert und dadurch erwärmt und durch anschließenden Wärmeaustausch mit Kühlwasser gekühlt und kondensiert wird,
e) Kühlung des Kühlwassers vor dessen Wärmeaustausch mit dem Kältemittel in Schritt d) durch Verdunstungskühlung,
**dadurch gekennzeichnet, dass** die Verdunstungskühlung in Schritt e) mit dem in Schritt a) erzeugten Restgas- und/oder, nach dessen Entspannung, mit dem in Schritt a) erzeugten Stickstoffstrom durchgeführt wird.

2. Verfahren gemäß Anspruch 1, **dadurch gekennzeichnet, dass** der in Schritt a) von Anspruch 1 erzeugte Stickstoffstrom erst über eine Turbine entspannt und dabei abgekühlt, anschließend zur Kühlung durch Wärmeaustausch des Kältemittels im Kältemittelkreislauf der Kompressionskälteanlage und dann zur Verdunstungskühlung des Kühlwassers verwendet wird.

3. Anlage zur Erzeugung von Synthesegas umfassend folgende Teilanlagen und Apparate:
a) Anlage zur Zerlegung von Luft unter Verwendung einer nach dem Prinzip der kryogenen Rektifikation unter erhöhtem Druck arbeitenden Luftzerlegungsanlage, die geeignet ist einen Strom gasförmigen Sauerstoffs und einen Strom gasförmigen Stickstoffs erhöhten Drucks und Umgebungstemperatur, sowie einen Restgasstrom, zu erzeugen,
b) Anlage zur Umwandlung eines kohlenstoffhaltigen Brennstoffs mit einem Vergasungsmittel zu einem hauptsächlich Wasserstoff und Kohlenmonoxid umfassenden Synthesegas, wobei die Teilanlagen a) und b) so verschaltet sind, dass der in Teilanlage a) erzeugte Sauerstoff dem in Teilanlage b) verwendeten Vergasungsmittel beigefügt werden kann,
c) Anlage zur Abtrennung der Sauergase Kohlendioxid und Schwefelwasserstoff aus dem in Teilanlage b) erzeugten Rohsynthesegas durch Absorption bei tiefer Temperatur mit einem flüssigen Absorptionsmittel, wie z.B. Methanol,
d) Kompressionskälteanlage, ein Kältemittel enthaltend, wie z.B. Ammoniak oder Propylen
e) Verdunstungskühler zum Kühlen von Kühlwasser
f) Optional eine Entspannungsturbine

## Claims

1. Method for producing a synthesis gas which consists mainly of carbon monoxide and hydrogen and has been freed of acid gases, proceeding from a hydrocarbonaceous fuel, and air and steam, comprising the following steps:
a) fractionating air by low-temperature rectification into an oxygen stream, a tail gas stream and a nitrogen stream, wherein the tail gas stream and the nitrogen stream are at ambient temperature and the nitrogen stream has an elevated pressure,
b) converting a hydrocarbonaceous fuel at elevated temperature and elevated pressure with the oxygen stream produced in step a) and the steam into a synthesis gas,
c) removing the acid gases from the synthesis gas produced in step b) by low-temperature absorption in an absorption column with a liquid absorbent,
d) cooling the absorbent used in step c) to the low temperature required for the low-temperature absorption by means of a compression refrigeration installation, wherein the compression refrigeration installation comprises a refrigerant circuit in which the refrigerant is compressed and thus heated and, by subsequent heat exchange with cooling water, cooled and condensed.
e) cooling the cooling water prior to its heat exchange with the refrigerant in step d) by evaporative cooling, **characterized in that** the evaporative cooling in step e) is carried out with the tail gas stream produced in step a) and/or, after its expansion, with the nitrogen stream produced in step a).

2. Method according to Claim 1, **characterized in that** the nitrogen stream produced in step a) of Claim 1 is firstly expanded via a turbine and in the process cooled, and is subsequently used for the cooling of the refrigerant in the refrigerant circuit of the compression refrigeration installation by heat exchange and then for the evaporative cooling of the cooling water.

3. Installation for producing synthesis gas, comprising the following sub-installations and apparatuses:
a) installation for fractionating air through the use of an air fractionation installation that works according to the principle of cryogenic rectification under elevated pressure, which is suitable for producing a stream of gaseous oxygen and a stream of gaseous nitrogen at elevated pressure and ambient temperature and a tail gas stream,
b) installation for converting a carbonaceous fuel with a gasifying agent into a synthesis gas which comprises mainly hydrogen and carbon monoxide, wherein the sub-installations a) and b) are connected such that the oxygen produced in sub-installation a) can be added to the gasifying agent used in sub-installation b),
c) installation for removing the acid gases carbon dioxide and hydrogen sulphide from the crude synthesis gas produced in sub-installation b) by absorption at low temperature with a liquid absorbent, such as for example methanol,
d) compression refrigeration installation containing a refrigerant, such as for example ammonia or propylene,
e) evaporative cooler for cooling cooling water,
f) optionally an expansion turbine.

## Revendications

1. Procédé pour la production d'un gaz de synthèse essentiellement constitué de monoxyde de carbone et d'hydrogène et débarrassé des gaz acides, à partir d'un combustible hydrocarboné ainsi que d'air et de vapeur, comprenant les étapes de procédé suivantes :
a) séparation de l'air, par rectification à basse température, en un flux d'oxygène, un flux de gaz résiduel et un flux d'azote, le flux de gaz résiduel et le flux d'azote étant à la température ambiante et le flux d'azote ayant une pression élevée,
b) transformation d'un combustible hydrocarboné à haute température et haute pression avec le flux d'oxygène produit dans l'étape a) et la vapeur d'eau en un gaz de synthèse,
c) séparation des gaz acides du gaz de synthèse produit dans l'étape b) par absorption à basse température dans une colonne d'absorption avec un agent d'absorption liquide,
d) refroidissement de l'agent d'absorption utilisé dans l'étape c) à la température basse nécessaire pour l'absorption à basse température à l'aide d'une installation frigorifique à compression, l'installation frigorifique à compression comprenant un circuit frigorifique, dans lequel l'agent réfrigérant est comprimé et ainsi réchauffé puis refroidi par échange thermique consécutif avec l'eau de refroidissement et condensé,
e) refroidissement de l'eau de refroidissement avant son échange thermique avec l'agent réfrigérant dans l'étape d) par refroidissement par évaporation,
**caractérisé en ce que** le refroidissement par évaporation dans l'étape e) est mis en oeuvre avec le flux de gaz résiduel produit dans l'étape a) et/ou mis en oeuvre, après sa détente, avec le flux d'azote produit dans l'étape a).

2. Procédé selon la revendication 1, **caractérisé en ce que** le flux d'azote produit dans l'étape a) selon la revendication 1 est d'abord détendu dans une turbine et ainsi refroidi, puis est utilisé pour le refroidissement de l'agent réfrigérant dans le circuit frigorifique de l'installation frigorifique à compression par échange thermique et est ensuite utilisé pour le refroidissement par évaporation de l'eau de refroidissement.

3. Installation pour la production de gaz de synthèse comprenant les installations partielles et les appareils suivants :
a) installation pour la séparation de l'air par utilisation d'une installation de séparation de l'air fonctionnant à haute pression d'après le principe de la rectification cryogénique, conçue pour produire un flux d'oxygène gazeux et un flux d'azote gazeux à haute pression et à température ambiante, ainsi qu'un flux de gaz résiduel,
b) installation pour la transformation d'un combustible hydrocarboné à l'aide d'un agent de gazéification en un gaz de synthèse comprenant essentiellement du monoxyde de carbone et de l'hydrogène, les installations partielles a) et b) étant reliées de sorte que l'oxygène produit dans l'installation partielle a) peut être ajouté à l'agent de gazéification utilisé dans l'installation partielle b),
c) installation pour la séparation des gaz acides de dioxyde de carbone et de sulfure d'hydrogène du gaz de synthèse brut produit dans l'installation partielle b) par absorption à basse température à l'aide d'un agent d'absorption liquide, comme par exemple le méthanol,
d) installation frigorifique à compression contenant un agent frigorifique, comme par exemple de l'ammoniac ou du propylène
e) refroidisseur par évaporation pour le refroidissement de l'eau de refroidissement
f) éventuellement une turbine de détente.
